# EUROPÄISCHE PATENTANMELDUNG

(11) **EP 2 949 979 A1**
(43) Veröffentlichungstag der Anmeldung: **02.12.2015**
(21) Anmeldenummer: 14169798.7
(22) Anmeldetag: 26.05.2014
(51) Int. Cl.: F16L 5/00

(54) **Installationsblock für Trockenbauwände**

(71) Anmelder: HILTI Aktiengesellschaft, 9494 Schaan (LI)
(72) Erfinder: Münzenberger, Herbert, 65191 Wiesbaden (DE); Monden, Thomas, 87778 Stetten (DE)
(74) Vertreter: Hilti Aktiengesellschaft Corporate Intellectual Property

(57) **Zusammenfassung**

Ein Installationsblock (13) für Trockenwände umfasst zumindest einen Durchbruch (26) zur Durchführung eines Kabels, Rohres oder dergleichen. Ferner weist der Installationsblock (13) zwei Installationsblockteile (13a, 13b) auf, die zusammengesetzt sind und eine Trennebene T haben, die den zumindest einen Durchbruch (26) schneidet. Ferner sind eine Trockenbauwand (10) und ein Verfahren zum Einbau eines Installationsblocks (13) beschrieben.

## Beschreibung

Die Erfindung betrifft einen Installationsblock für eine Trockenbauwand mit einem Wanddurchbruch für Kabel oder Rohre und eine entsprechende Trockenbauwand sowie ein Verfahren zum Einbau eines Installationsblocks.

Aufgrund der gesetzlichen Regelungen beim Brandschutz, insbesondere der allgemeinen bauaufsichtlichen Zulassungen (ABZ) und Prüferergebnisse (ABP), ergeben sich je nach Anwendungsgebiet unterschiedliche Anforderungen an den Brandschutz. Beispielsweise wird gefordert, dass bei raumabschließenden Bauteilen wie Wänden abhängig von definierten Umgebungsbedingungen Abstände von Leitungsdurchlässen von mehr als 50 mm, mehr als 100 oder 200 mm gegen Abschottungen, wie feuerfeste Türen, eingehalten werden müssen. Auch muss bei bestimmten Bedingungen ein definierter Abstand eingehalten werden, beispielsweise mindestens 50 mm von einem Wanddurchlass zu einem benachbarten Wanddurchlass.

Beim Aufbau einer Trockenbauwand wird üblicherweise zunächst ein Ständerwerk aufgestellt, das den Rahmen stellt und an dem abschließend Trockenbauplatten angebracht werden, um die Trockenbauwand auszubilden. Dann werden Leitungen oder Rohre verlegt. Dies wäre der richtige Zeitpunkt, um gemeinsam mit den Leitungen oder Rohren den Brandschutz zu installieren. Allerdings sind Elektroinstallateure, Lüftungsbauer oder Rohrverleger nicht für den Brandschutz zuständig. Um die vorgeschriebenen Abstände, Ringspalte, Befestigungen usw. einzuhalten, gibt es daher Hilfsmittel, mit denen die brandschutzrechtlichen Bedingungen in einfacher Weise eingehalten werden können.

Beispielsweise werden zur Definition der Lage und Größe der Durchlässe Einsätze verwendet, die auch Installationsbox, Installationsrahmen oder Hüllrohr genannt werden. Diese Einsätze umfassen Durchlässe, die eine Führung der Rohre, Leitungen und Kabel gemäß den normgemäßen Anforderungen sicherstellen. Nach der Installation dieser Einsätze können die Kabel, Leitungen und Rohre in einfacher Weise durch die Durchlässe geführt werden.

Es kann allerdings vorkommen, dass der Brandschutz erst installiert wird, nachdem die Leitungen oder Rohre bereits verlegt worden sind. Tritt dieser Fall ein, so ist es sehr schwierig, den Brandschutz zu installieren, da die Leitungen und Rohre nicht mehr durch die Durchlässe der bekannten Einsätze geführt werden können.

Der Erfindung liegt die Aufgabe zugrunde, die Installation eines Brandschutzes bei einer Trockenbauwand generell zu erleichtern.

Die der Erfindung zugrunde liegende Aufgabe wird mit den Gegenständen und Verfahren der unabhängigen Ansprüche gelöst. Vorteilhafte Weiterbildungen ergeben sich aus den Unteransprüchen.

Die Erfindung betrifft einen Installationsblock für Trockenwände, der zumindest einen Durchbruch zum Durchlass eines Kabels, Rohres oder dergleichen und wenigstens zwei Installationsblockteile umfasst, die zusammensetzbar sind und eine Trennebene haben, die den zumindest einen Durchbruch schneidet. Die Teilung des Installationsblocks in wenigstens zwei Installationsblockteile erleichtert die Installation, da der Installationsblock auch bei bereits verlegten Leitungen, Kabeln oder Rohren, oder auch bei bereits installierten Brandschutz- und anderen Abdichtungssystemen schnell und einfach installiert werden kann. Hierzu wird ein erstes Installationsblockteil beispielsweise von unterhalb der bereits verlegten Leitungen gelegt und ein zweites Installationsblockteil von oben auf das erste Installationsblockteil gesetzt. Dadurch ist der Installationsblock geschlossen und der wenigstens eine Durchbruch definiert. Der Durchbruch ist im zusammengesetzten Zustand insbesondere umlaufend geschlossen. Insbesondere liegt die Trennebene der Installationsblockteile in der Ebene der Längsachse des zumindest einen Durchbruchs. Hierdurch können die beiden Installationsblockteile untereinander vertauscht werden, da sie identisch ausgebildet sind. Dies vereinfacht die Lagerung sowie die Installation, da nicht zwischen einem oberen und einem unteren Installationsblockteil unterschieden werden muss.

Alternativ kann jedoch die Trennebene von der Ebene der Längsachse entfernt sein, sodass sich ein Installationsblockteil mit einem größeren Aufnahmeteilbereich ausbildet. In diesen größeren Aufnahmeteilbereich können die bereits verlegten Leitungen, Kabel und Rohre besser eingesetzt und gehalten werden.

Gemäß einem Aspekt der Erfindung weist der Installationsblock wenigstens einen Installationsabschnitt auf, über den der Installationsblock in einer Führung eines Ständerwerks einer Trockenbauwand installiert werden kann, insbesondere jeweils einen Installationsabschnitt an zwei entgegengesetzten Seiten des Installationsblocks. Über den Installationsabschnitt kann der Installationsblock sicher in der Führung des Ständerwerks gehalten und dort befestigt werden. Zur Befestigung kann der Installationsabschnitt mit der Führung beispielsweise verschraubt werden. Hierfür können entsprechende Gewindeöffnungen im Installationsblock vorgesehen sein.

Insbesondere ist der Installationsabschnitt als seitlicher Vorsprung des Installationsblocks ausgebildet, der eine Installationsabschnittsdicke hat, die kleiner als die Installationsblockdicke ist. Der als Vorsprung ausgeführte Installationsabschnitt passt sich in den Raum ein, der zwischen den Flanken der beim Ständerwerk üblicherweise verwendeten Profile gebildet ist. Die Differenz der Dicken, also der Installationsblockdicke und der Installationsabschnittsdicke, beträgt mindestens 10 mm, wobei beide Dicken in der gleichen Richtung gemessen werden. Allgemein ausgedrückt kann der Dickenunterschied des Installationsblocks und des Installationsabschnitts gleich groß sein wie die Materialdicke des Profils zuzüglich der Dicke der anzubringenden Trockenbauplatten. Hierdurch kann ein absatzfreier Übergang von der Trockenbauplatte zum Installationsblock bei einer fertiggestellten Trockenbauwand gewährleistet sein.

Ein weiterer Aspekt der Erfindung sieht vor, dass der Installationsabschnitt mittig an der jeweiligen Seite des Installationsblocks angeordnet ist. Hierdurch ist garantiert, dass die Installationsblockteile auch hinsichtlich ihrer Befestigung in der Ständerwand bzw. Aufnahme in den Führungen untereinander austauschbar sind.

Gemäß einem weiteren Aspekt der Erfindung ist die Dichte des Installationsblocks kleiner als 1,1 kg / l (Kilogramm pro Liter) und größer als 0,5 kg / l. Insbesondere ist die Dichte kleiner als 0,9 kg / l. Eine geringe Dichte entspricht einem geringen Gewicht bei gleichbleibenden Volumen, was die Handhabung erleichtert. Auch ist das geringe Gewicht vorteilhaft, da üblicherweise das Ständerwerk nicht für das Tragen schwerer Lasten ausgelegt ist. Vielmehr dient das Ständerwerk als Führung, Anlage- und Befestigungsteil für die Trockenbauplatten.

Vorzugsweise umfasst der Installationsblock Mineralfasern, insbesondere Steinwolle oder Glasfasern, oder anorganische, also nicht brennbare, Leichtfüllstoffe. Diese Leichtfüllstoffe sind insbesondere Glasschaum, geblähte Perlite, Hohlglaskugeln, Blähton oder dergleichen und/oder Mischungen dieser Füllstoffe. Je nach Einsatzgebiet ergeben sich unterschiedliche Anforderungen an das Material hinsichtlich des Gewichts und der Brandschutzeigenschaften. Über die Auswahl der Materialien können die Anforderungen entsprechend erfüllt werden. Ferner kann der Installationsblock Gips oder eine Gipsmischung umfassen.

Die Erfindung betrifft ferner eine Trockenbauwand, die ein Ständerwerk und einen Installationsblock der zuvor beschriebenen Art umfasst, wobei der Installationsblock zwischen Profilen des Ständerwerks angeordnet ist. Insbesondere ist er an ihnen befestigt. Der Begriff "zwischen" ist so zu verstehen, dass die Profile gegenüberliegend angeordnet sind, wobei ihre Seiten und einen dazwischenliegenden Raum aufspannen. Der Installationsblock erstreckt sich zumindest innerhalb dieses aufgespannten Raums. Hierbei kann es sich insbesondere um die Flanken der Profile handeln, die gleichzeitig die Führung ausbilden.

Insbesondere umfasst der Installationsblock zumindest einen Installationsabschnitt, der in einer Führung eines Profils des Ständerwerks aufgenommen ist. So kann eine Verbindung der genannten Teile durch eine einfache Verschraubung erreicht werden. Ferner können die Positionierung und die Installation des Installationsblocks im Ständerwerk in einfacher Weise erfolgen.

Gemäß einem Aspekt der Erfindung weist die Trockenbauwand eine Dicke auf, die der Installationsblockdicke entspricht. Dabei soll insbesondere eine Toleranz von +/- 3mm, bevorzugt 0,5 mm gelten. Der Installationsblock passt sich somit in das Ständerwerk ein, sodass die Trockenbauwand absatzfrei ausgebildet ist.

Ein weiterer Aspekt der Erfindung sieht vor, dass zumindest eine Trockenbauplatte am Ständerwerk angebracht ist und ein Übergang von der Trockenbauplatte zu einem benachbarten Installationsblock in Trockenbauwandnormalrichtung weitgehend absatzfrei vorgesehen ist. Der Installationsblock ist ein einziges Bauteil und bildet gleichzeitig mit der jeweils angebrachten Trockenbauplatte die Sichtoberfläche zu beiden Seiten der Trockenbauwand. Hierdurch können die Trockenbauplatten in einfacher Weise bündig an den Installationsblock angesetzt werden und es tritt kein Spalt auf, der verputzt werden muss. Bei der Trockenbauplatte kann es insbesondere um eine Gipskartonplatte handeln.

Ferner betrifft die Erfindung ein Verfahren zum Einbau eines Installationsblocks der zuvor beschriebenen Art in eine Trockenbauwand, insbesondere eine Trockenbauwand durch welche bereits Kabel, Rohre oder dergleichen gezogen wurden, wobei eines der Installationsblockteile des Installationsblocks in ein Ständerwerk eingesetzt wird, wobei wenigstens ein Kabel, Rohr oder dergleichen in das Installationsblockteil eingelegt wird, und wobei das zweite Installationsblockteil in das Ständerwerk derart eingesetzt wird, dass der Installationsblock ausgebildet wird. Hierdurch kann der Installationsblock auch nachträglich, das heißt bei bereits verlegten Kabeln oder Rohren, installiert werden. Der Zeitpunkt der Installation des Brandschutzes ist demnach bei Verwendung des erfindungsgemäßen Installationsblocks unkritisch.

Ein weiterer Aspekt der Erfindung sieht vor, dass die beiden Installationsblockteile im Ständerwerk befestigt werden, sodass der Installationsblock mit dem Ständerwerk verbunden ist. Dies stellt sicher, dass der Installationsblock richtig positioniert und fixiert im Ständerwerk gehalten ist.

Im Folgenden wird die Erfindung mit Ausführungsbeispielen anhand schematischer Zeichnungen näher erläutert. Es zeigt:
- Figur 1: eine schematische Ansicht in perspektivischer Darstellung einer sich im Aufbau befindlichen Trockenbauwand,
- Figur 2: einen vertikalen Schnitt durch einen Installationsblock,
- Figur 3: einen Schnitt durch die Trennebene T einer teilweise fertiggestellten Trockenbauwand, und
- Figur 4: einen Schnitt durch die Trennebene T einer alternativen Ausführungsform des Installationsblocks.

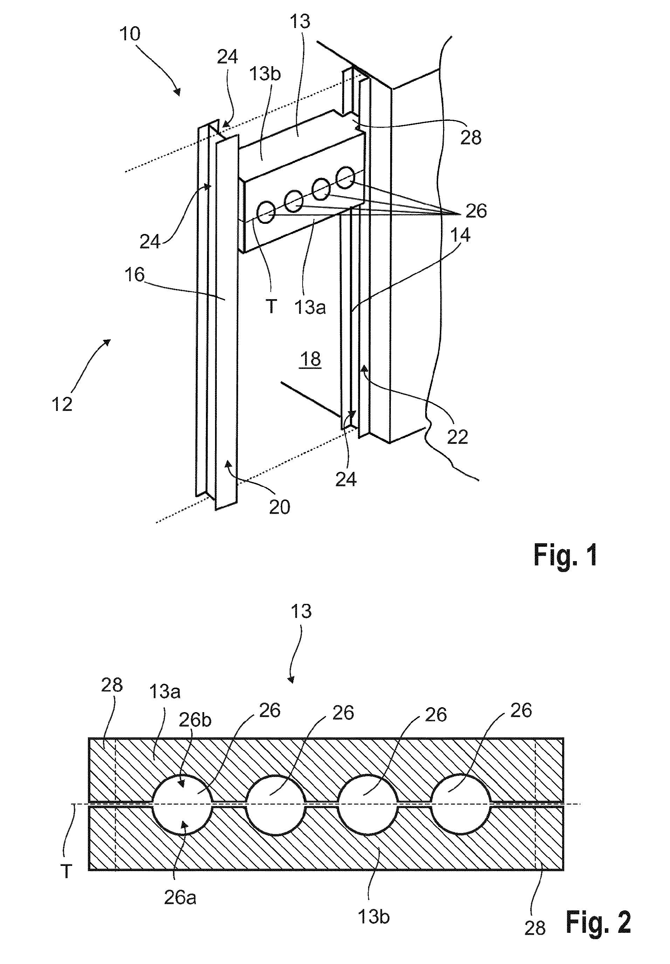

In der perspektivischen Ansicht gemäß Fig. 1 ist eine noch nicht fertiggestellte Trockenbauwand 10 während ihres Aufbaus dargestellt, die ein Ständerwerk 12 und einen Installationsblock 13 aufweist. Mit gestrichelten Linien ist gezeigt, wie die fertiggestellte Trockenbauwand 10 gebaut werden soll.

Das Ständerwerk 12 umfasst Profile 14, 16, wobei ein erstes Profil 14 an einer Raumwand 18 befestigt ist, insbesondere verschraubt. Ferner umfasst das Ständerwerk 12 aus Gründen der Übersichtlichkeit hier nicht dargestellte Profile, die am Boden und der Decke befestigt werden. Die Profile 14, 16 werden in diese nicht dargestellten Profile gesteckt, um das Ständerwerk 12 auszubilden.

Die Profile 14, 16 weisen jeweils Anlageflächen 20, 22 auf, an denen eine hier nicht dargestellte Trockenbauplatte angebracht werden kann. Auf der entgegengesetzten Seite zu den Anlageflächen 20, 22 sind weitere Anlageflächen ausgebildet, an denen ebenfalls eine Trockenbauplatte befestigt werden kann. Durch die beiden noch anzubringenden Trockenbauplatten wird die Trockenbauwand 10 definiert.

Das Profil 14 weist in der gezeigten Ausführungsform ein U-förmiges Querschnittsprofil auf, wohingegen das Profil 16 ein H-förmiges Querschnittsprofil hat. Die Wahl des Querschnittsprofils kann beispielsweise in Abhängigkeit von der Einbausituation getroffen werden.

Die Profile 14, 16 weisen jeweils wenigstens eine Führung 24 auf, die durch die überstehenden Flanken gebildet ist, an denen die Anlageflächen 20, 22 ausgebildet sind.

In zwei sich gegenüberliegenden Führungen 24 von zwei beabstandeten Profilen 14, 16 kann der Installationsblock 13 angebracht werden.

Der Installationsblock 13 umfasst in der gezeigten Ausführungsform vier kreisrunde und nebeneinander mittig angeordnete Durchbrüche 26, die als Durchlässe für Kabel und Rohre oder dergleichen dienen.

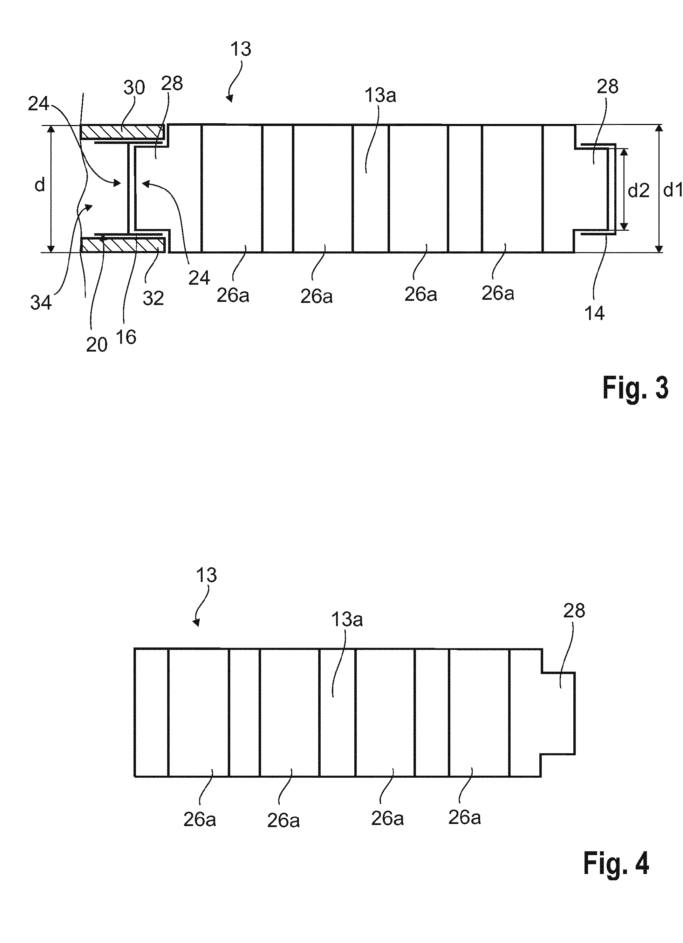

Zur Befestigung des Installationsblocks 13 am Ständerwerk 12 weist der Installationsblock 13 zudem Installationsabschnitte 28 auf, die in den Führungen 24 der Profile 14, 16 aufgenommen sind, wie anhand von Figur 3 näher erläutert wird.

Ferner besteht der Installationsblock 13 in der gezeigten Ausführungsform aus zwei Installationsblockteilen 13a, 13b, die in Figur 1 zusammengesetzt dargestellt sind. Die beiden Installationsblockteile 13a, 13b können in einer gestrichelt dargestellten Trennebene T getrennt werden.

Hierdurch kann der Installationsblock 13 auch bei bereits verlegten Leitungen, Kabeln oder Rohren nachträglich in einfacher Weise eingebaut werden, wie nachfolgend erläutert wird.

Aus Figur 2 geht der Installationsblock 13 und die beiden Installationsblockteile 13a, 13b detaillierter hervor. In der gezeigten Ausführungsform sind die beiden Installationsblockteile 13a, 13b identisch ausgebildet, sodass jeder der Installationsblockteile 13a, 13b einen gleichgroßen Durchbruchsabschnitt 26a, 26b aufweist.

Durch die identische Ausbildung der beiden Installationsblockteile 13a, 13b können die Installationsblockteile 13a, 13b untereinander vertauscht werden. Dies erleichtert die Lagerung und Installation, da nicht zwischen einem oberen und einem unteren Installationsblockteil unterschieden werden muss.

Alternativ können die Installationsblockteile 13a, 13b auch ungleich ausgebildet sein, sodass beispielsweise das Installationsblockteil 13a einen größeren Durchbruchsabschnitt 26a hat, sodass das Einsetzen der Kabel und Leitungen bei der Installation vereinfacht ist, wie nachfolgend beschrieben wird.

Ferner ist aus Figur 2 ersichtlich, dass die Installationsabschnitte 28 an beiden entgegengesetzten Seiten der jeweiligen Installationsblockteile 13a, 13b vorgesehen sind.

Figur 3 zeigt einen horizontalen Schnitt durch die Trockenbauwand 10 der Figur 1 in der Trennebene T zu einem späteren Zeitpunkt, sodass das Installationsblockteil 13a von oben zu sehen ist.

Zu dem gezeigten späteren Zeitpunkt sind bereits zwei Trockenbauplatten 30, 32 am Profil 16 bzw. an seiner Anlagefläche 20 und der entgegengesetzten Anlagefläche angebracht. Bei den Trockenbauplatten 30, 32 kann es sich um Gipskartonplatten handeln.

Aus Figur 3 geht zudem hervor, wie der Installationsblock 13 bzw. das Installationsblockteil 13a in den Führungen 24 aufgenommen ist.

Die an beiden Enden in Längsrichtung, die der Trockenbauwandlängsrichtung entspricht, angeordneten Installationsabschnitte 28, sind als seitliche Vorsprünge ausgebildet. Das Einbringen der Installationsblockteile 13a, 13b kann durch eine zu den Profilen 14, 16 schräge Ausrichtung erfolgen, sodass die Installationsabschnitte 28 in die Führungen 24 eingefädelt werden.

Durch eine nicht gezeigte Verschraubung mittels Trockenbauschrauben durch das jeweilige Profil 14, 16 und den Installationsabschnitten 28 können die Teile miteinander befestigt werden.

Ferner geht aus Figur 3 hervor, dass die beiden Trockenbauplatten 30, 32 bündig mit dem Installationsblock 13 abschließen, das heißt, dass kein Absatz zum Installationsblock 13 auftritt. In Dickenrichtung der Trockenbauwand 10 sind die Außenoberflächen der Trockenbauplatten 30, 32 somit planar zu den angrenzenden Stirnflächen des Installationsblocks 13. Dies liegt daran, dass die Dicke d der Trockenbauwand 10 exakt der Installationsblockdicke d1 entspricht.

Die Installationsabschnitte 28 weisen eine Installationsabschnittsdicke d2 auf, die in etwa dem Abstand der Flanken der Führungen 24 entspricht, sodass die Installationsblockteile 13a, 13b sicher darin geführt werden können.

Ferner bilden die beiden Trockenbauplatten 30, 32 einen freien Raum 34, in den Dämmstoff eingesetzt werden kann, wie Steinwolle, um sowohl eine Wärmedämmung, eine Geräuschdämmung und einen Brandschutz zu bewirken.

Die Montage einer Trockenbauwand geschieht bevorzugt wie folgt:

Zunächst werden die in Figur 1 nicht gezeigten Boden- und Deckenprofile befestigt. Nachfolgend werden an bestehenden Raumwänden 18 Profile 14 befestigt, die vorzugsweise ein U-Querschnittsprofil haben. Ferner können weitere vertikale Profile 16 in die Aufnahmen der Boden- und Deckenprofile gesetzt werden, wo sie wahlweise befestigt werden können oder ausschließlich durch eine Klemmung halten. Die vertikalen Profile 16 können insbesondere ein H-Querschnittsprofil aufweisen. Damit ist das Ständerwerk 12 aufgebaut.

In der Folge wird wenigstens ein Installationsblock13 in einer gewünschten Position an den Profilen 14, 16 befestigt. Sollte der Installationsblock 13 vor der Verlegung von etwaigen Rohren, Leitungen oder Kabeln installiert werden, so kann der Installationsblock 13 am Stück installiert werden. In dem Fall, dass die Rohre, Leitungen oder Kabel bereits verlegt worden sind, wird der Installationsblock 13 wie folgt installiert:

Zunächst wird das erste Installationsblockteil 13a unterhalb der bereits verlegten Leitungen, Kabel oder Rohre in die Führungen 24 eingesetzt oder eingefädelt.

Danach wird das zweite Installationsblockteil 13b oberhalb der bereits verlegten Leitungen, Kabel oder Rohre in die Führungen 24 eingesetzt oder eingefädelt.

Anschließend werden die beiden Installationsblockteile 13a, 13b so zueinander verschoben, dass sie den Installationsblock 13 ausbilden und die Leitungen, Kabel und Rohre in den Durchbrüchen 26 aufgenommen sind.

Nun können die beiden Installationsblockteile 13a, 13b am Ständerwerk 12 befestigt werden, sodass der Installationsblock 13 fixiert ist. Anschließend werden die Trockenbauplatten 30, 32 mit den Profilen 14, 16 des Ständerwerks 12 befestigt, sodass sich eine lückenlose Wand ergibt. Dabei ist die Sichtseite, also die vertikale Außenseite des Installationsblocks 13, absatzfrei in diese Wand integriert.

Der Installationsblock 13 umfasst bevorzugt an der Sichtseite einen rechteckigen Querschnitt. Somit können die benachbarten Trockenbauplatten durch gerade und rechtwinklig zueinander ausgerichtete Schnitte in die benötigte Form und Größe gebracht werden. Dies ist ein Zuschneidevorgang, der auch unter Montagebedingungen einfach, schnell, sauber und genau ausgeführt werden kann.

Nun können die wenigen vorhandenen Spalte zwischen den Trockenbauplatten 30, 32 und dem Installationsblock 13 mit einer Spachtelmasse verspachtelt werden. Da die Sichtoberflächen der genannten Bauteile in einer Ebene sind, ist das Spachteln einfach und sauber möglich.

Da das Material des Installationsblocks 13 bevorzugt ein Gipsmaterial ist und die Trockenbauplatten 30, 32 ebenfalls bevorzugt aus einem Gipsmaterial bestehen, herrscht eine Materialgleichheit. Diese Materialgleichheit erleichtert das Spachteln. Auch kann der Installationsblock 13 bevorzugt an der Sichtoberfläche mit der gleichen Pappe bzw. Karton beschichtet sein, die bei den Trockenbauplatten 30, 32 verwendet wird. Dadurch wird auch die gleiche Oberflächengüte, bzw. -rauigkeit erzielt.

Hiermit ist der Bau der Trockenbauwand 10 im Wesentlichen beendet. Nachfolgend werden die Durchbrüche 26 unter Beachtung der Brandschutzverordnung abgedichtet. Hierzu eignen sich Steinwolle, brandhemmende Schäume, Brandschutzstopfen, Dichtmasse, Wrap, Speed Sleeve usw.

In Figur 4 ist eine alternative Ausführungsform des Installationsblocks 13 dargestellt, wobei dieser im Querschnitt in der Trennebene T gezeigt ist, sodass das Installationsblockteil 13a von oben zu sehen ist.

Aus Figur 4 geht hervor, dass an einer Seite des Installationsblocks 13 kein Installationsabschnitt 28 vorgesehen ist. Diese Ausführung des Installationsblocks 13 wird verwendet, wenn nur Profile mit U-förmigen Querschnittsprofil verwendet werden, die alle in eine Richtung ausgerichtet sind und somit für den Installationsblock 13 auf der einen Seite keine Führung 24 vorhanden ist, in die ein etwaiger Installationsabschnitt 28 eingesetzt werden könnte.

Die Dicke der Profile 14, 16 in Trockenwandnormalrichtung kann beispielsweise 60 mm betragen. Entsprechend weist der Installationsabschnitt 28 des Installationsblocks 13 eine Breite von 55 mm auf, sodass er einfach in den sich zwischen den Flanken, die die Führung 24 bilden, eingesetzt werden kann. Außerhalb auf beiden Seiten der Profile 14, 16 befinden sich die Trockenbauplatten 30, 32, die eine Dicke von 12,5 mm haben können. In diesem Fall ergibt sich für den Installationsblock 13 eine Installationsblockdicke d1 von 85 mm, damit sich der absatzfreie Übergang von den Trockenbauplatten 30, 32 zu dem Installationsblock 13 ergibt.

Da der Installationsblock 13 durch das Ständerwerk 12 getragen wird und die Materialstärke nicht darauf ausgelegt ist, größere Lasten zu tragen, weist der Installationsblock 13 ein geringes Gewicht auf. Gips selbst hat eine Dichte von 2,3 kg / l und durch die Verwendung von anorganischen Leichtfüllstoffen kann die Dichte auf unter 1,0 kg / l oder darunter gesenkt werden. Durch das geringe Gewicht wird zum einen die Montage des Installationsblocks 13 erleichtert und zum anderen wird die Gefahr des Setzens verringert, wodurch sich mit der Zeit Risse in der fertiggestellten Trockenbauwand 10 bilden könnten.

## Patentansprüche

1. Installationsblock (13) für Trockenwände (10), der zumindest einen Durchbruch (26) zur Durchführung eines Kabels, Rohres oder dergleichen und wenigstens zwei Installationsblockteile (13a, 13b) umfasst, die zusammengesetzbar sind und eine Trennebene T haben, die den zumindest einen Durchbruch (26) schneidet.

2. Installationsblock (13) gemäß Anspruch 1, **dadurch gekennzeichnet, dass** die Trennebene T der Installationsblockteile (13a, 13b) in der Ebene der Längsachse des zumindest einen Durchbruchs (26) liegt.

3. Installationsblock (13) gemäß Anspruch 1 oder 2, **dadurch gekennzeichnet, dass** der Installationsblock (13) wenigstens einen Installationsabschnitt (28) aufweist, über den der Installationsblock (13) in einer Führung (24) eines Ständerwerks (12) einer Trockenbauwand (10) installiert werden kann, insbesondere jeweils einen Installationsabschnitt (28) an zwei entgegengesetzten Seiten des Installationsblocks (13).

4. Installationsblock (13) gemäß Anspruch 3, **dadurch gekennzeichnet, dass** der Installationsabschnitt (28) als seitlicher Vorsprung des Installationsblocks (13) ausgebildet ist, der insbesondere eine Installationsabschnittsdicke (d2) hat, die kleiner als die Installationsblockdicke (d1) ist.

5. Installationsblock (13) gemäß Anspruch 3 oder 4, **dadurch gekennzeichnet, dass** der Installationsabschnitt (28) mittig an der jeweiligen Seite des Installationsblocks (13) angeordnet ist.

6. Installationsblock (13) gemäß einem der vorangegangenen Ansprüche, **dadurch gekennzeichnet, dass** die Dichte des Installationsblocks (13) zwischen 0,5 kg / l und 1,1 kg / l beträgt, und insbesondere kleiner als 0,9 kg / l ist.

7. Installationsblock (13) gemäß einem der vorangegangenen Ansprüche, **dadurch gekennzeichnet, dass** der Installationsblock (13) Mineralfasern, insbesondere Steinwolle oder Glasfasern, oder anorganische Leichtfüllstoffe umfasst, insbesondere Glasschaum, geblähte Perlite, Hohlglaskugeln, Blähton oder dergleichen und/oder Mischungen dieser Füllstoffe.

8. Trockenbauwand (10) mit einem Ständerwerk (12) und einem Installationsblock (13) nach einem der vorhergehenden Ansprüche, wobei der Installationsblock (13) zwischen Profilen (14, 16) des Ständerwerks (12) angeordnet und insbesondere an ihnen befestigt ist.

9. Trockenbauwand (10) gemäß Anspruch 8, wobei der Installationsblock (13) zumindest einen Installationsabschnitt (28) umfasst, der in einer Führung (24) eines Profils (14, 16) des Ständerwerks (12) aufgenommen ist.

10. Trockenbauwand (10) gemäß Anspruch 8 oder 9, wobei die Trockenbauwand eine Dicke (d) aufweist, die der Installationsblockdicke (d1) entspricht.

11. Trockenbauwand (10) gemäß einem der Ansprüche 8 bis 10, **dadurch gekennzeichnet, dass** zumindest eine Trockenbauplatte (30, 32) an dem Ständerwerk (12) angebracht ist und ein Übergang von der Trockenbauplatte (30, 32) zu einem benachbarten Installationsblock (13) in Trockenbauwandnormalrichtung weitgehend absatzfrei vorgesehen ist.

12. Verfahren zum Einbau eines Installationsblocks (13) gemäß einem der Ansprüche 1 bis 7 beim Aufbau einer Trockenbauwand (10), insbesondere bei bereits verlegten Kabeln, Rohre oder dergleichen, wobei eines der Installationsblockteile (13a, 13b) des Installationsblocks (13) in ein Ständerwerk (12) eingesetzt wird, wobei wenigstens ein Kabel, Rohr oder dergleichen in das eine Installationsblockteil (13a, 13b) eingelegt wird, und wobei das zweite Installationsblockteil (13b, 13a) in das Ständerwerk (12) derart eingesetzt wird, dass der Installationsblock (13) ausgebildet wird.

13. Verfahren gemäß Anspruch 12, wobei die beiden Installationsblockteile (13a, 13b) im Ständerwerk (12) befestigt werden, sodass der Installationsblock (13) mit dem Ständerwerk (12) verbunden ist.
